# EUROPÄISCHE PATENTSCHRIFT

(11) **EP 2 820 061 B1**
(45) Veröffentlichungstag und Bekanntmachung des Hinweises auf die Patenterteilung: **21.07.2021**
(21) Anmeldenummer: 13706002.6
(22) Anmeldetag: 25.02.2013
(51) Int. Cl.: C08G 18/48, C08G 18/79, C08J 5/24

(54) **2K-POLYURETHANSYSTEME MIT HOHER GLASÜBERGANGSTEMPERATUR**
2K POLYURETHANE SYSTEMS WITH HIGH GLASS TRANSITION TEMPERATURE
SYSTÈMES DE POLYURÉTHANE 2K DOTÉS D'UNE TEMPÉRATURE DE TRANSITION VITREUSE ÉLEVÉE

(30) Priorität: 28.02.2012 EP 12157299; 28.02.2012 EP 12157301
(43) Veröffentlichungstag der Anmeldung: 07.01.2015
(73) Patentinhaber: Henkel AG & Co. KGaA, 40589 Düsseldorf (DE)
(72) Erfinder: FERENCZ, Andreas, 40223 Düsseldorf (DE); THIELE, Lothar, 40764 Langenfeld (DE); SCHMIDT, Tamara, 46049 Oberhausen (DE); BECKER, Konrad, 40597 Düsseldorf (DE); LUPP, Wolfgang, 47058 Duisburg (DE); ULLMANN, Dustin, 70184 Stuttgart (DE); OKAMOTO, Oliver-Kei, 40213 Düsseldorf (DE)
(86) Internationale Anmeldenummer: PCT/EP2013/053703
(87) Internationale Veröffentlichungsnummer: WO 2013/127734

(56) Entgegenhaltungen:
- EP-A1- 1 449 863
- EP-A1- 1 464 661
- WO-A1-2009/080740
- US-A- 5 071 939
- Dow Plastics: "ISONATE 143LP Modified MDI Product Information", , 1 March 2001 (2001-03-01), XP055415702, Retrieved from the Internet: URL:http://msdssearch.dow.com/PublishedLit eratureDOWCOM/dh_003f/0901b8038003f15b.pdf ?filepath=polyurethane/pdfs/noreg/026-0000 7.pdf&fromPage=GetDoc [retrieved on 2017-10-13]

## Beschreibung

Die Erfindung betrifft eine 2K-PU-Zusammensetzung, also eine Zwei-Komponenten Zusammensetzung auf Basis einer Polyol-Komponente und einer Isocyanatkomponente, wobei diese mit niedriger Viskosität in fasergefüllte Formen eingebracht werden soll. Dabei soll die Zusammensetzung im vernetzten Zustand eine hohe Glasübergangstemperatur aufweisen.

Faserverstärkte Formteile sollen hohe mechanische Eigenschaften aufweisen. Dazu ist es notwendig, dass die eingesetzten Matrixmaterialien stabil mit den Fasermaterialien verbunden sind. Alle Fehlstellen wirken negativ auf die mechanischen Eigenschaften der Formteile. Es sollen deswegen möglichst keine Lunker, Hohlstellen und/oder Blasen in dem entsprechenden Teil enthalten sein. Geeignete Matrixmaterialien auf Basis von Epoxidbindemitteln sind bekannt. Diese haben aber verschiedene Nachteile, beispielsweise sind die Reaktivitäten der Systeme häufig zu hoch. Das kann zu einer hohen Exothermie der Reaktionsmischung führen, die auch die Eigenschaften der Polymere beeinträchtigen kann. Deswegen wurden auch andere Bindemittel auf Basis von reaktiven 2-Komponenten-Polyurethan-Systemen (2K-PU-Systemen) entwickelt.

Die WO2008/110602 beschreibt eine PU-Klebstoff-Zusammensetzung, die aus einer Komponente enthaltend Verbindungen mit aciden H-Atomen besteht und einer Polyisocyanatkomponente zusammen mit einem Trimerisationskatalysator für die Isocyanate.

Die WO2011/067246 beschreibt ein Harzsystem, enthaltend Polyisocyanate, Verbindungen mit aciden H-Atomen reaktiv gegen das Polyisocyanat, einen Katalysator und eine höherfunktionelle Säure. Dabei muss die Säure in der Verbindung mit den reaktiven H-Gruppen löslich sein.

Die WO 2010/023060 beschreibt eine Mischung einer Isocyanat-reaktiven Verbindung, die einen Trimerisationskatalysator enthält. Dieser wird aus Phthalsäure oder Trimellithsäure durch Umsetzung mit Polyolen erhalten, wobei spezielle Mengenverhältnisse eingehalten werden müssen.

Die EP 0305140 beschreibt ein Verfahren zum Herstellen eines starren Formteils mit einer PU- Zusammensetzung, wobei die reaktive Mischung Polyisocyanate, Polyole und ein cyclisches Alkylencarbonat enthalten muss. Zusätzlich ist ein Katalysator hergestellt aus tertiären Aminen und einem Alkylencarbonat enthalten.

Die WO 2009/150010 beschreibt eine Zusammensetzung aus Polyolen mit einer Isocyanatkomponente, wobei die Isocyanatkomponente mindestens 65% der NCO-Gruppen als sterisch gehinderte NCO-Gruppen umfasst. Dabei soll die Zusammensetzung in Faserwerkstoffen als Matrixharz eingesetzt werden.

WO 2009/080740 beschreibt einen 2-Komponenten-Polyurethanklebstoff bestehend aus einer Polyolkomponente enthaltend 2 bis 30 Gew.-% mindestens eines Polyesterdioly mit einem Molekulargewicht größer 1000 g/mol, 5 bis 35 Gew.-% mindestens eines 3 bis 14 funktionellen Polyols, 5 bis 35 Gew.-% hydrophobe Polyole, 2 bis 65 Gew.-% weitere Additive und Hilfsstoffe, wobei die Summe 100% ergeben soll, sowie eine Vernetzerkomponente aus Polyisocyanaten in einem NCO/OH-Verhältnis von 0,9:1 bis 1,5:1, wobei der vernetzte Klebstoff eine Tg größer 50 °C aufweist.

EP 1 464 661 stellt Formgedächnispolymerzusammensetzungen bereit, die ein bifunktionelles Isocyanat und/oder ein trifunktionelles Isocyanat und eine Polyol mit einem durchschnittlichen Molekulargewicht von 100 bis 550 und mit einem molaren Verhältnis der funktionalen Gruppen Isocyanat zu Polyol von 0,9 bis 1,1:1,0.

EP 1 449 863 betrifft ein Verfahren zur Herstellung eines faserverstärkten Formgedächnispolymer, wobei das Verfahren das Tränken eines Carbonfasermaterials in einer Menge von 10 bis 60 Vol.-% mit einer Formgedächnispolymerzusammensetzung für einen faserverstärkten Kunststoff mit einer Viskosität von 1000 mPas oder weniger und einem Glasübergangspunkt (Tg) von 50 bis 70 °C, die unter Verwendung eines bifunktionellen flüssigen Diisocyanats, eines bifunktionellen Polyols mit einem Molekulargewicht von 1000 oder weniger und eines eine aktive Wasserstoffgruppe enthaltenden bifunktionellen Kettenverlängerungsmittel mit einem Molverhältnis der funktionellen Gruppen des Diisocyanats, Polyols und Kettenverlängerungsmittels von 5,0 bis 1,0 : 1,0 : 4,0 bis 0,2 hergestellt wird, und das nachfolgende Härten umfasst.

US 5,071,939 offenbart einen Polyisocyanurat-Verbundstoff, der aus einer flüssigen Zusammensetzung hergestellt wird, die ein organisches Polyisocyanat, ein Polyol, welches einzeln oder als gemischtes Polyetherpolyol mit einer OH-Zahl von 40 bis 400 vorliegt, und einem Trimerisierungskatalysator, der ein Co-Katalysator eines tertiären Amins und einer Epoxy-Verbindung ist, enthält, wobei das Verhältnis von organischem Polyisocyanat und Polyol in Bezug auf die Konzentration des isocyanurierten Isocyanats im Bereich von 3,0 bis 5,5 mmol/g liegt.

Die oben genannten Zusammensetzungen werden häufig eingesetzt, um faserverstärkte Formteile herzustellen. Dabei werden in geschlossenen Formen entsprechende Fasermaterialien eingelegt, diese werden danach mit den oben genannten Materialien als Matrixharz umhüllt. Das kann durch verschiedene Verfahren unterstützt werden, beispielsweise durch Anlegen von Druck, Erhöhung der Temperatur oder Anlegen von Vakuum. Da Fehlstellen die Anwendungseigenschaften deutlich beeinträchtigen ist es zweckmäßig, wenn niedrigviskose Materialien eingesetzt werden.

Es hat sich gezeigt, dass die Viskosität der PU-Systeme am Anfang der Reaktion sehr niedrig eingestellt werden kann. Dabei sollen die Bindemittel alle Faseranteile umfließen, da auch kleine verbleibende Blasen an den Fasern, beispielsweise an Kreuzungspunkten das Formteil schwächen. Da aber die entsprechenden Formteile auch größere Ausmaße oder komplizierte Formen aufweisen können, ist es notwendig, dass die Viskosität auch für einen Zeitraum niedrig bleibt, der zur Befüllung der Form ausreicht. Nur unter diesen Umständen kann sichergestellt werden, dass möglichst keine Fehlstellen in dem Matrixmaterial auftreten, wenn ein hoher Füllgrad an Faseranteilen im Bauteil erzielt werden soll. Auf der anderen Seite soll aber die Zusammensetzung möglichst schnell vernetzen, um ein schnelles Entformen zu ermöglichen und die Formen besser auszunutzen.

Die oben genannten bekannten Zusammensetzungen weisen spezielle Katalysatoren auf. Diese sollen sicherstellen, dass eine Vernetzungsreaktion der Isocyanat-/OH-Gruppen verzögert wird. Damit ist es möglich, den Anstieg der Viskosität der Zusammensetzungen zu verzögern. Es wird dabei aber auch die endgültige Vernetzung verlangsamt. Weiterhin ist es üblich, dass solche Katalysatoren nur in geringen Mengen vorhanden sind. Diese müssen also in einem genau zu bemessenden Anteil enthalten sein, da sonst die Eigenschaften für die industrielle Fertigung nicht ausreichend reproduzierbar sind.

Eine weitere Anforderung an die entsprechenden Matrixbindemittel ist die, dass nach der Vernetzung auch an die äußeren Bedingungen die mechanischen Eigenschaften konstant bleiben. Es hat sich gezeigt, dass ein Einflussparameter für die mechanischen Eigenschaften die Glasübergangstemperatur (Tg) ist. Das kann über die Auswahl der Polyole und die Vernetzungsdichte beeinflusst werden, dabei soll aber die zur Verarbeitung notwendige Viskosität nicht negativ beeinflusst werden. Insbesondere kann die Tg über die Auswahl der Polyole oder die Vernetzungsdichte beeinflusst werden, dabei soll aber die zur Verarbeitung notwendige Viskosität nicht negativ beeinflusst werden.

Es ergibt sich deswegen die Aufgabe, ein Polyurethan-Bindemittelsystem bereitzustellen, dass im nicht vernetzten Zustand eine niedrige Viskosität aufweist und diese niedrige Viskosität während eines längeren Verarbeitungszeitraums erhalten bleibt. Nach der Vernetzung sollen dann Matrixzusammensetzungen erhalten werden, die eine hohe Glasübergangstemperatur aufweisen. Diese mechanischen Eigenschaften sollen auch unter den Nutzungsbedingungen erhalten bleiben, ein Abbau des vernetzten Bindemittels soll möglichst vermieden werden. Zusätzlich sollen die Komponenten einzeln lagerstabil sein, damit reproduzierbare Herstellprozesse sichergestellt sind.

Die Aufgabe wird gelöst durch eine Zwei-Komponenten-Polyurethan- Zusammensetzung mit einer Viskosität von 20 mPas bis 3000 mPas (EN ISO 2555, 25 °C), enthaltend 30 bis 70 Gew.-% Polyester- und/oder Polyetherpolyole mit einer Funktionalität über 2,5 und mit einem Molekulargewicht von 200 g/mol bis 3000 g/ mol, 70 bis 30 Gew.-% mindestens eines Polyisocyanats, 0,1 bis 5 Gew.-% Additive ausgewählt aus Stabilisatoren, Katalysatoren und Trennmitteln, wobei die Zusammensetzung ein NCO:OH-Verhältnis von 2:1 bis 1:2 aufweist und Polyisocyanate eingesetzt werden, wobei 3 bis 25 Mol% der NCO-Gruppen der Polyisocyanante zu Uretonimin umgesetzt sind und wobei die Zusammensetzung frei ist von Amin-haltigen Bestandteilen und wobei die die vernetze Zusammensetzung eine Glasübergangstemperatur von über 100 °C aufweist, gemessen mit DSC, DIN 11357.

Ein weiterer Gegenstand sind Verfahren zum Herstellen von Formteilen aus Fasermaterialien und solchen 2K-PU-Zusammensetzungen sowie die erhaltenen Faserverbundwerkstoffe.

Die erfindungsgemäße 2K-PU-Zusammensetzung besteht aus einer Polyolkomponente und einer Vernetzerkomponente. Die Polyolkomponente enthält mindestens ein flüssiges Polyol und Additive. Die Vernetzerkomponente enthält die Isocyanate und gegebenenfalls solche Additive, die nicht mit NCO-Gruppen reagieren.

Als Polyolkomponente sind die üblichen dem Fachmann bekannten Polyolverbindungen einzusetzen. Im Rahmen der Erfindung können eine Vielzahl von mehrfunktionellen Alkoholen eingesetzt werden. Bevorzugt sollen diese Polyole keine weiteren mit NCO-Gruppen reaktiven funktionellen Gruppen aufweisen, wie beispielsweise reaktive Aminogruppen. Bei den Verbindungen mit mehreren OH-Gruppen kann es sich um solche handeln, die endständige OH-Gruppen tragen oder es können Verbindungen sein, die über die Kette verteilt seitenständige OH-Gruppen aufweisen. Bei den OH-Gruppen handelt es sich um solche, die mit Isocyanaten reagieren können, insbesondere sind primäre oder sekundäre OH-Gruppen. Geeignet sind Polyole mit 2 bis 10, bevorzugt mit 2 bis 6 OH-Gruppen pro Molekül. Es können Gemische unterschiedlicher Polyole eingesetzt werden, soweit eine entsprechende durchschnittliche Funktionalität erhalten wird. Das Molekulargewicht soll von 100 bis 3000g/mol betragen (zahlenmittleres Molekulargewicht M_{N}, gemessen über GPC), bevorzugt von 200 bis 1500 g/mol. Die Polyole sollen als Mischung bevorzugt in flüssiger Form bei Raumtemperatur (25°C) vorliegen, insbesondere ist jedes Polyol einzeln flüssig.

Als Polyole sind beispielsweise flüssige Polyesterpolyole geeignet, die durch Kondensation von Di- bzw. Tricarbonsäuren, wie z.B. Adipinsäure, Sebacinsäure und Glutarsäure, mit niedermolekularen Diolen bzw. Triolen, wie z.B. Etylenglykol, Propylenglykol, Diethylenglykol, Triethylenglykol, Dipropylenglykol, 1,4-Butandiol, 1,6-Hexandiol, Glyzerin oder Trimethylolpropan, hergestellt werden können. Eine weitere Gruppe solcher einzusetzenden Polyole sind die Polyester auf der Basis von Lactonen, wie Polycaprolactone. Dem Fachmann sind solche OH-funktionellen Polyester bekannt und sie sind kommerziell erhältlich. Insbesondere geeignet sind zwei oder drei endständige OH-Gruppen enthaltende Polyesterpolyole. Dabei sollen diese Polyesterpolyole ein Molekulargewicht bis 2000 g/mol, vorzugsweise im Bereich von 500 bis 1000 g/mol aufweisen.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Beispiele solcher Polyole sind Rizinusöl oder Dimerdiole. Diese oleochemischen Polyole sollen Hydroxylzahlen von 50 bis 400 mg KOH/g, bevorzugt 100 bis 300 mg KOH/g aufweisen, das entspricht einem Molekulargewicht von ca. 250 bis 2000 g/mol.

Weitere geeignete Polyesterpole sind Polycarbonat-Polyole. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden. Eine weitere Gruppe der erfindungsgemäß einzusetzenden Polyole sind Polylactone, beispielsweise Polyester auf der Basis von ε-Caprolacton. Auch sind solche Polyesterpolyole geeignet, die in der Molekülkette eine oder mehrere Urethangruppen enthalten.

Es können auch aliphatische Polyole eingesetzt werden. Diese sollen eine Funktionalität von 2 bis 10 aufweisen, insbesondere von 2 bis 6. Es kann sich dabei um die bekannten Polyole handeln, wie Ethylenglykol Propandiol, Butandiol-1,4, Pentandiol-1,5, Hexandiol-1,6, Heptandiol-1,7, Octandiol-1,8 1,10-Decandiol, 1,12-Dodecandiol, Dimerfettalkohol, Glycerin, Hexantriol Glycerin, Trimethylolpropan, Pentaerythrit oder Neopentylalkohol. Es können auch sogenannte Zuckeralkohole eingesetzt werden. Geeignete aliphatische Alkohole besitzen ein Molekulargewicht von 60 bis 400 g/mol. Insbesondere werden jedoch lineare Alkohole mit 2 bis 30 C-Atomen eingesetzt, die zwei bis zu vier OH-Gruppen aufweisen.

Eine besonders geeignete Gruppe sind Polyetherpolyole, die Umsetzungsprodukte von niedermolekularen, polyfunktionellen Alkoholen mit Alkylenoxiden sind. Die Alkylenoxide weisen vorzugsweise 2 bis 4 C-Atome auf. Es kann sich dabei um zwei- oder höherfunktionelle Polyole handeln, bevorzugt sind Polyole mit 2, 3 oder 4 OH-Gruppen. Beispiele sind Ethylenglykol, Propandiol, Butandiol, Hexandiol, Octandiol; polyfunktionelle Alkohole, wie Glycerin, Hexantriol, Trimethylolpropan, Pentaerythrit, Neopentylalkohol; Zuckeralkohole, wie Mannitol, Sorbitol, Methylglykoside. Auch entsprechende aromatische Polyole wie Resorcin, Hydrochinon, 1,2,2- oder 1,1,2-Tris-(hydroxyphenyl)-ethan können mit den Alkylenoxiden umgesetzt werden. Weitere, im Rahmen der Erfindung geeignete Polyole entstehen durch Polymerisation von Tetrahydrofuran (Poly-THF). Es können statistische und/oder Blockcopolymere des Ethylenoxids und Propylenoxids eingesetzt werden. Polyetherpolyole mit 2, 3 oder 4 OH-Gruppen sind bevorzugt. Die Polyetherpolyole werden in einer dem Fachmann bekannten Weise hergestellt und sind kommerziell erhältlich.

Bevorzugt sind Polyoxyethylen- oder Polyoxypropylendiole oder Triole. Das Molekulargewicht diese Polyether kann dabei von ca. 200 bis zu 3000 g/mol betragen, insbesondere bis 1000 g/mol.

Polyole, die tertiäre Aminogruppen enthalten, sind in der Zusammensetzung nicht enthalten. Diese verschlechtern die Applikationseigenschaften. Die Funktionalität der Polyolmischung soll größer 2,5 betragen, insbesondere von 2,5 bis 4. In einer Ausführungsform der Erfindung ist die Zusammensetzung dadurch gekennzeichnet, dass als Polyole Polyester-und/oder insbesondere Polyetherpolyole eingesetzt werden mit einer mittleren Funktionalität von über 2,5. Ist die Vernetzungsdichte nicht ausreichend, ist das vernetzte Matrixbindemittel nicht ausreichend mechanisch stabil.

Als Polyisocyanate in der Isocyanatkomponente sind mehrfach funktionelle Isocyanate geeignet. Vorzugsweise enthalten die Isocyanate im Mittel 2 bis 5, vorzugsweise bis 4 NCO-Gruppen. Beispiele für geeignete Isocyanate sind aromatische Isocyanate, wie1,5-Naphthylendiisocyanat, 2,4- oder 4,4'-Diphenylmethandiisocyanat (MDI), Xylylendiisocyanat (XDI), m- und p-Tetramethylxylylendiisocyanat (TMXDI), die Isomere des Toluylendiisocyanats (TDI), Di- und Tetraalkyldiphenyl-methandiisocyanat, 3,3'-Dimethyl-diphenyl-4,4'-diisocyanat (TODI) 1,3-Phenylendiisocyanat, 1,4-Phenylendiisocyanat, 4,4'-Dibenzyldiisocyanat; aliphatische Isocyanate, wie hydriertes MDI (H12MDI), 1-Methyl-2,4-diisocyanato-cyclohexan, 1,12-Diisocyanatododecan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan (IPDI), Tetramethoxybutan-1,4-diisocyanat, Butan-1,4-diisocyanat, Hexan-1,6-diisocyanat (HDI), Dimerfettsäurediisocyanat, Dicyclohexylmethandiisocyanat, Cyclohexan-1,4-diisocyanat, Ethylendiisocyanat oder Phthalsäure-bis-isocyanatoethylester.

Es können auch Anteile von niedermolekularen Prepolymeren eingesetzt werden, beispielsweise Umsetzungsprodukte von MDI bzw. TDI mit niedermolekularen Diolen, wie z.B. Ethylenglykol, Diethyenglykol, Propylenglykol, Dipropylenglykol oder Triethylenglykol. Diese Prepolymere können durch Umsetzung eines Überschusses von monomerem Polyisocyanat in Gegenwart von Diolen hergestellt werden. Dabei liegt das Molekulargewicht der Diole im Allgemeinen unterhalb von 1000 g/mol. Gegebenenfalls kann das Umsetzungsprodukt durch Destillation von monomeren Isocyanaten befreit werden. Es können auch Umsetzungsprodukte solcher Polyole mit den NCO-modifizierten Diisocyanaten enthalten sein. Die Menge dieser Umsetzungsprodukte soll so gewählt werden, dass noch eine ausreichend niedrige Viskosität der Zusammensetzung erhalten wird.

In einer Ausführungsform sind erfindungsgemäß aromatische Diisocyanate bevorzugt, in einer anderen Form werden vorzugsweise Mischungen von aliphatischen und aromatischen Isocyanaten eingesetzt. Insbesondere sollen dabei mindestens 50 Mol% der NCO-Gruppen aus den Isomeren des MDI (2,2'; 2,4'; 4,4') stammen. Erfindungsgemäß ist es notwendig, dass die Menge der Isocyanatgruppen durch Umsetzung zu Carbodiimiden und seinen Derivaten, insbesondere zu Uretoniminen, reduziert ist. Dabei sollen überwiegend trifunktionelle Uretoniminderivate enthalten sein. Der Anteil der umgesetzten NCO-Gruppen soll 3 bis 25 Mol% der ursprünglich vorhandenen NCO-Gruppen betragen. Vorzugsweise soll die Mischung der Polyisocyanate bei Raumtemperatur (25°C) fließfähig sein. Um stabile Zusammensetzungen zu erhalten, soll die Isocyanatkomponente keine Bestandteile enthalten, die unter Lagerbedingungen oder Anwendungsbedingungen eine Umwandlung der NCO-Gruppen hervorrufen.

Die erfindungsgemäßen 2K-PU-Zusammensetzungen können weiterhin Hilfsstoffe enthalten, die vorzugsweise ganz oder teilweise der Polyolkomponente zugemischt werden. Darunter werden Stoffe verstanden, die in der Regel in kleinen Mengen zugesetzt werden, um die Eigenschaften der Zusammensetzung zu verändern, wie z.B. die Viskosität, das Benetzungsverhalten, die Stabilität, die Reaktionsgeschwindigkeit, die Blasenbildung, die Lagerfähigkeit oder die Haftung, und auch die Gebrauchseigenschaften dem Anwendungszweck anzupassen. Beispiele für Hilfsstoffe sind Verlaufsmittel, Netzmittel, Katalysatoren, Alterungsschutzmittel, Farbstoffe, Trockenmittel, Harze und/oder Wachse.

Die erfindungsgemäße Zusammensetzung enthält zusätzlich Stabilisatoren. Als Stabilisatoren im Sinne dieser Erfindung sind Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer).

Es können auch Katalysatoren eingesetzt werden. Als Katalysatoren werden die üblichen, in der Polyurethan-Chemie bekannten, metallorganischen Verbindungen eingesetzt, wie z.B. Eisen-, Titan-, Zirkon-, Aluminium-, Blei-, Wismut- oder auch insbesondere Zinn-Verbindungen. Bevorzugt ist es möglich, dass diese Katalysatoren als Mischung oder als Komplex im molaren Verhältnis von 0,25:1 bis 2:1 Polyhydroxyverbindungen enthalten, ausgewählt aus cyclischen α-Hydroxyketonen und/ oder Triphenolen mit drei benachbarten OH-Gruppen. Insbesondere können als cyclische α-Hydroxyketone 5-, 6-oder 7-Ring-Verbindungen eingesetzt werden und als Triphenole 1-Alkyl-substituierte 2,3,4- oder 3,4,5-OH-Derivate eingesetzt werden. Es handelt sich dabei um Substanzen, die als Komplexbildner mit den oben erwähnten Metallatomen wirken. Dabei sollen diese Komplexbildner eine Molmasse unter 500 g/mol aufweisen oder sie können auch an einen Träger gebunden sein. Insbesondere sind solche Substanzen als Komplexbildner geeignet, die gegebenenfalls eine weitere OH-, COOH- oder Ester-Gruppe aufweisen. Damit kann bei der Vernetzungsreaktion dieser Komplexbildner auch mit der reaktiven Zusammensetzung reagieren und fest die Matrix eingebunden werden.

Der Katalysator, kann in einer Menge von 0,01 bis etwa 5 Gew.-% bezogen auf das Gesamtgewicht der Zusammensetzung eingesetzt werden.

Eine Ausführungsform der 2K-PU-Zusammensetzung ist dadurch gekennzeichnet, dass als Katalysator Sn, Ti oder Bi -Verbindungen enthalten sind, insbesondere Sn Katalysatoren mit cyclischen Komplexbildnern ausgewählt aus cyclischen α-Hydroxyketonen oder 1-Alkyl-2,3,4-Triphenolederivaten oder cyclischen tertiären Aminen.

Es ist auch möglich, dass geringe Mengen von Weichmacher, Farbpasten oder eines Molekularsiebes enthalten sind. Als Trockenmittel können auch flüssige Verbindungen eingesetzt werden, die während der Lagerung Feuchtigkeit abfangen. Die Menge solcher Bestandteile soll aber unter 10 Gew.-% (bezogen auf die 2K-Zusammensetzung) betragen. Bevorzugt sind keine Pigmente, Molekularsiebe, Füllstoffe und/oder Weichmacher enthalten. Die erfindungsgemäße Zusammensetzung soll bevorzugt keine organischen Lösemittel enthalten. Im Wesentlichen nicht flüchtige Verbindungen, die in geringen Mengen zum Dispergieren oder Lösen von Additiven eingesetzt werden, werden in dieser Hinsicht nicht als Lösemittel betrachtet.

Weiterhin können gegebenenfalls Harze enthalten sein. Dabei kann es sich um natürliche Harze oder um synthetische Harze handeln. Eine besondere Ausführungsform setzt OH-Gruppen-haltige Harze ein, insbesondere Harze mit mehreren OH-Gruppen. Diese können mit den Isocyanaten reagieren. In einer bevorzugten Ausführungsform kann die Menge bis zu 15 Gew.-% betragen.

Die Additive werden so ausgewählt und den Komponenten zugesetzt, dass die Lagerstabilität gegeben ist. Insbesondere sollen keine Additive zugegeben werden, beispielsweise mono- oder polyfunktionelle Carbonsäuren, die eine Bildung von Gasblasen wie CO₂ im Klebstoff fördern.

Die erfindungsgemäße Zusammensetzung enthält 30 bis 70 Gew.-% Polyole mit einer Funktionalität über 2,5, insbesondere Polyetherpolyole und Polyesterpolyole, 70 bis 30 Gew.-% Polyisocyanate, wobei 3 bis 25 Mol% der NCO-Gruppen zu Uretoniminen umgesetzt sind, wobei insbesondere mindestens 50 Mol-% aller Isocyanatgruppen aus Isomeren des MDI stammen, 0,1 bis 5 Gew.-% Additive ausgewählt aus Stabilisatoren, Katalysatoren und Trennmitteln. Die Mischung ist frei von Amin-haltigen Bestandteilen, wie Katalysatoren oder Polyolen.

Um eine erfindungsgemäße Anwendung zu ermöglichen, weist eine erfindungsgemäße 2K-PU-Zusammensetzung eine Viskosität in gemischter Form von 20 bis 3000 mPas auf (gemessen mit Brookfield RTV, DIN ISO 2555), gemessen bei einer Temperatur zwischen 20 und 60°C. Insbesondere soll die Viskosität von 20 bis 1000 mPas betragen gemessen bei 20 bis 40°C. Dabei kann die erfindungsgemäße 2K-PU-Zusammensetzung bei diesen Temperaturen appliziert werden. Die Viskosität soll unmittelbar nach dem Mischen bestimmt werden, beispielsweise bis zu 2 min. nach dem Mischen, durch die einsetzende Vernetzungsreaktion nimmt sie langsam zu.

Die erfindungsgemäße 2K-PU-Zusammensetzung kann in ihrer Verarbeitung unterschiedlich eingesetzt werden. Eine Ausführungsform weist eine lange Verarbeitungszeit auf, diese soll über 60 min. betragen. Eine andere Ausführungsform besitzt eine Topfzeit über 10 min., danach ist eine sehr schnelle Vernetzung zu beobachten. Als Verarbeitungszeit soll die Zeit verstanden werden, nach der die Viskosität einer Mischung bei 25°C auf mehr als 3000 mPas gestiegen ist. Bei höherviskosen Mischungen (mehr als 1500 mPas) ist die entsprechende Grenze mehr als 5000 mPas. Die Verarbeitungszeit kann durch die Auswahl Isocyanate und der Katalysatoren beeinflusst werden.

Durch die Auswahl der Bestandteile weist die erfindungsgemäße 2K-PU-Zusammensetzung eine Glasübergangstemperatur (Tg) von über 100°C auf (gemessen mit DSC, DIN 11357), in einer anderen Ausführungsform insbesondere von 100 bis 130°C. Die hohe Tg ist zweckmäßig, um die geforderte mechanische Stabilität des ausgehärteten Verbundsystems zu erhalten. Durch die erfindungsgemäße Auswahl der Polyol und der oligomeren Isocyanatkomponente wird eine hohe mechanische Stabilität der Zusammensetzung erhalten. Die Strukturstabilität des Matrixbindemittels kann beispielsweise über den E-Modul gemessen werden. Durch die erfindungsgemäße Zusammensetzung wird sichergestellt, dass dieser bei Temperaturen zwischen -10°C und + 70°C der E- Modul größer 1000 MPa beträgt (analog DIN EN ISO 527).

Die erfindungsgemäßen 2K-PU-Zusammensetzungen sind als Matrixharz für faserverstärkte Formteile (Composites) geeignet. Dabei können diese in verschiedenen Anwendungsverfahren eingesetzt werden, beispielsweise im RTM-Verfahren oder im Infusionsverfahren.

Gegenstand der Erfindung ist auch ein Verfahren zum Herstellen von Composite-Werkstoffen, bei dem die erfindungsgemäßen 2K-PU-Zusammensetzungen eingesetzt werden. Dabei werden die erfindungsgemäßen Zusammensetzungen durch Eintragen in eine Form appliziert.

Als Bestandteile von Composite-Werkstoffen sind bekannte hochfesten Faserwerkstoffe geeignet. Diese können beispielsweise aus Glasfasern; synthetischen Fasern, wie Polyesterfasern, Polyethylenfasern, Polypropylenfasern, Polyamidfasern, Polyimidfasern oder Aramidfasern; Kohlenstofffasern; Borfasern; oxidischen oder nicht oxidischen Keramikfasern, wie Aluminiumoxid/Siliciumdioxidfasern, Siliciumcarbidfasern; Metallfasern, beispielsweise aus Stahl oder Aluminium; oder aus Naturfasern, wie Flachs, Hanf oder Jute bestehen. Diese Fasern können in Form von Matten, Geweben, Gewirken, Gelegen, Vliesen oder Rovings eingebracht werden. Es können auch zwei oder mehr dieser Fasermaterialien als Gemisch verwendet werden. Es können Kurzschnittfasern ausgewählt werden, bevorzugt werden jedoch Langfasern eingesetzt, insbesondere Gewebe und Gelege. Solche hochfesten Fasern, Rovings, Gelege und Gewebe sind dem Fachmann bekannt.

Dabei werden die Fasern in den Formen in vorgegebener Ausrichtung eingelegt. Die Menge der Fasermaterialien kann sehr hoch sein, insbesondere werden Faseranteile von über 60 % (Volumen%) bezogen auf das Formteil eingesetzt. Es können gegebenenfalls auch noch weitere Einlegeteile eingefügt werden. Danach wird die vorgemischte erfindungsgemäße Zusammensetzung eingebracht.

Das erfindungsgemäße Verfahren umfasst zwei Ausführungsformen. Es kann das Anfließen durch Einspritzen unter Druck (Resin-Transfer-Molding- oder auch RTM-Verfahren) gegebenenfalls auch mit Unterstützen durch Vakuum in kurzer Zeit durchgeführt werden. Dabei werden hier Zusammensetzungen bevorzugt, die eine kürzere Verarbeitungszeit aufweisen, danach aber eine schnelle Reaktion zeigen. Eine andere Ausführungsform füllt die Form durch Anlegen von Vakuum (Infusionsverfahren). In dieser Ausführungsform ist eine lange offene Zeit vorteilhaft. Die Viskosität der erfindungsgemäß geeigneten Zusammensetzung muss gering sein. Sie darf auch unter den Verfahrensbedingungen des Füllens der Form nur gering ansteigen. Erfindungsgemäß soll die Mischung der Zusammensetzung, unmittelbar nach dem Mischen zwischen 20 bis 3000 mPas (EN ISO 2555, Brookfield Viskosimeter, 25 °C) betragen, bevorzugt unter 1000 mPas. Dabei ist darauf zu achten, dass die Fließgeschwindigkeit so gewählt wird, dass Luft oder Gase zwischen den Fasermaterialien entweichen können.

In der Ausführungsform für Infusionsverfahren ist eine lange Verarbeitungszeit besonders wichtig, Deswegen werden in dieser Ausführung insbesondere Zusammensetzungen eingesetzt, die keine Katalysatoren enthalten. Das Anfließen an die Fasermaterialien, ein Verdrängen der Luftblasen und ein Füllen der Form kann über einen längeren Zeitraum durchgeführt werden. Durch den langsamen Verlauf beziehungsweise Fortschritt der Reaktion können die Fasermaterialien vollständig in dem Matrixmaterial eingebettet werden.

In der Ausführungsform als RTM-Verfahren muss eine Befüllung der Form in kurzer Zeit erfolgen. Dabei wird die trübe Reaktionsmischung unter Druck in die Form gebracht. Durch die niedrige Anfangsviskosität kann ein schnelles Einbetten der Fasern sichergestellt werden. In dieser Ausführungsform enthalten die Zusammensetzungen bevorzugt auch Katalysatoren. Diese führen nach kurzer Zeit zu einer Beschleunigung der Reaktion, sodass eine schnelle Durchhärtung erfolgt. Das kann auch durch eine erhöhte Temperatur unterstützt werden. Dabei ist dann eine kurze Verweilzeit in der Form möglich.

Da nach dem Mischen eine Vernetzungsreaktion beginnt, ist es zweckmäßig, dass entweder nur die benötigten Mengen der Mischung hergestellt und unmittelbar verarbeitet werden. Eine andere Arbeitsweise stellt kontinuierlich die PU-Mischung her und bringt diese in die Form ein.

Nach dem Füllen der Form beginnt die Zusammensetzung zu härten. Das kann ohne zusätzliche Wärmezufuhr geschehen. Die durch die Vernetzungsreaktion entstehende Reaktionswärme führt nicht zu einer örtlichen Überhitzung der Substrate. Um die Vernetzungsreaktion zu beschleunigen ist es möglich, die befüllte Form zu erwärmen. Sie kann auf Temperaturen bis zu 120°C erwärmt werden. Dabei wird eine schnellere Vernetzung des Matrixmaterials erreicht. Damit kann die Form früher von dem Formteil entfernt werden und steht dann für weitere Arbeitsschritte zur Verfügung.

Die erfindungsgemäßen 2K-PU-Zusammensetzungen sind insbesondere zum Einbetten von Fasermaterialien geeignet, beispielsweise für das Infusionsverfahren oder für das RTM-Verfahren. Dabei werden die bekannten Fasermaterialien angeordnet und insgesamt in eine Polymermatrix eingebettet. Weiterhin ist eine Beschleunigung der Aushärtung durch gezielte Temperatursteuerung des Verfahrens möglich und nicht direkt durch die vorgegebene Zusammensetzung. Die Zusammensetzung zeigt eine gute Haftung auf den Fasersubstraten. Durch die verminderte Viskosität kann eine fehlerfreie Matrix erzeugt werden, insbesondere Blasen werden in dem Formteil vermieden. Ein weiterer Vorteil liegt darin, dass durch die Auswahl der Isocyanatkomponente eine Zusammensetzung mit einer hohen mechanischen Festigkeit erhalten wird. Die erfindungsgemäß geeigneten Zusammensetzungen ergeben nach Vernetzung als Composite-Teil eine hohe mechanische Stabilität.

Ein weiterer Vorteil der Zusammensetzung ist die erhöhte Lagerstabilität der getrennt gelagerten Zusammensetzung. Durch die chemische Modifikation der NCO-Gruppen bleibt die Isocyanatkomponente lange Zeit lagerstabil, ein Ausfällen einzelner Bestandteile als Trübung oder Niederschlag ist nicht zu beobachten.

### Beispiele:

Die nachfolgenden Beispiele erläutern die Erfindung.

### Beispiel 1:

### Komponente A

Polyethertriol (amin-frei, Mn ca. 350)

### Komponente B

4,4'-MDI (13% der NCO-gruppen als Uretonimin)
NCO:OH-Verhältnis 1,2: 1

Verfahren: Die Bestandteile werden in einem Gefäß mit einem schnelllaufenden Rührer unter Feuchtigkeitsausschluss gemischt, zusammen mit 0,05 % Sn-katalysator, die Mischung danach im Vakuum unter Rühren entgast.
Viskosität (2 min): ca. 200 mPas

Aus den Mischungen wurden Prüfkörper (4 mm) gegossen und 45 min bei 95°C vernetzt sowie 60 min bei 150°C.
E-Modul < 2200 MPa.

### Beispiel 2:

Mischungen des MDI mit einem festgelegten Carbodiimid-/Uretonimin-Gehalt werden für eine Dauer von 3 bzw. 6 Monaten bei unterschiedlichen Temperaturen gelagert und auf Stabilität überprüft.

| 2,4'-/ 4,4'-MDI-Mischungen | Carbodiimid-/Uretonimin-Gehalt | 6 Monate bei 12°C | 3 Monate bei 23°C | 6 Monate bei 23°C |
|---|---|---|---|---|
| 50% 2,4'-MDI | 0% | Bodensatz | trüb | trüb |
| | 10% | in Ordnung | in Ordnung | in Ordnung |
| 35 % 2,4'-MDI | 0% | trüb | trüb | trüb |
| | 5% | in Ordnung | in Ordnung | in Ordnung |
| | 10 % | in Ordnung | in Ordnung | in Ordnung |

Die Versuche zeigen eine verbesserte Lagerstabilität der Isocyanatkomponente in Gegenwart von Carbodiimid/Uretonimin.

## Patentansprüche

1. Zwei-Komponenten-Polyurethan- Zusammensetzung mit einer Viskosität von 20 mPas bis 3000 mPas (EN ISO 2555, 25 °C), enthaltend
- 30 bis 70 Gew.-% Polyester- und/oder Polyetherpolyole mit einer Funktionalität über 2,5 und mit einem Molekulargewicht von 200 g/mol bis 3000 g/ mol,
- 70 bis 30 Gew.-% mindestens eines Polyisocyanats,
- 0,1 bis 5 Gew.-% Additive ausgewählt aus Stabilisatoren, Katalysatoren und Trennmitteln,
wobei die Zusammensetzung ein NCO:OH-Verhältnis von 2:1 bis 1:2 aufweist und Polyisocyanate eingesetzt werden, wobei 3 bis 25 Mol% der NCO-Gruppen der Polyisocyanante zu Uretonimin umgesetzt sind und wobei die Zusammensetzung frei ist von Amin-haltigen Bestandteilen und wobei die die vernetze Zusammensetzung eine Glasübergangstemperatur von über 100 °C aufweist, gemessen mit DSC, DIN 11357.

2. 2K-PU-Zusammensetzung nach Anspruch 1, **dadurch gekennzeichnet, dass** die Mischung eine Viskosität von unter 1000 mPas (25°C) aufweist.

3. 2K-PU-Zusammensetzung nach einem der Ansprüche 1 oder 2, **dadurch gekennzeichnet, dass** als Polyisocyanat MDI und seine UretoniminDerivate enthalten sind.

4. 2K-PU-Zusammensetzung nach einem der vorhergehenden Ansprüche, **dadurch gekennzeichnet, dass** als Katalysator Sn, Ti oder Bi - Verbindungen enthalten sind, insbesondere Sn Katalysatoren mit cyclischen Komplexbildnern ausgewählt aus cyclischen α-Hydroxyketonen oder 1-Alkyl-2,3,4-Triphenolederivaten.

5. 2K-PU-Zusammensetzung nach einem der Ansprüche 1 bis 4, **dadurch gekennzeichnet, dass** die Zusammensetzung frei von Katalysatoren ist.

6. 2K-PU-Zusammensetzung nach einem der vorhergehenden Ansprüche, **dadurch gekennzeichnet, dass** die Mischung im Wesentlichen frei von Lösemitteln, Weichmachern, Carbonsäuren und/oder Pigmenten ist.

7. Verfahren zum Herstellen von Faserverbundwerkstoffen, wobei eine äußere Form mit Fasermaterialien gefüllt wird und in diese Form eine flüssige 2K-PU-Zusammensetzung nach einem der Ansprüche 1 bis 6 unter Druck eingebracht wird.

8. Verfahren zum Herstellen von Faserverbundwerkstoffen, wobei eine äußere Form mit Fasermaterialien gefüllt bereitgestellt wird und in diese Form eine flüssige 2K-PU-Zusammensetzung nach einem der Ansprüche 1 bis 6 unter Anlegen von Vakuum eingebracht wird.

9. Verfahren nach Anspruch 7 oder 8, wobei der Faseranteil größer/gleich 60 Volumen-% beträgt und die 2K-PU-Zusammensetzung eine Viskosität von 20 bis 3000 mPas aufweist.

10. Verfahren nach Anspruch 9, wobei die Mischung bei einer Temperatur bis 120 °C vernetzt wird.

11. Faserverbundwerkstoff enthaltend Fasermaterialien aus organischen und/oder anorganischen Fasern, wobei als Matrixmaterial eine vernetzte 2K-PU-Zusammensetzung nach einem der Ansprüche 1 bis 6 enthalten ist.

12. Faserverbundwerkstoff nach Anspruch 11, wobei der Faseranteil größer /gleich 60 Vol-% beträgt.

13. Faserverbundwerkstoff nach Anspruch 12, wobei die vernetzte Bindemittelmatrix Uretonimin-Gruppen aufweist

## Claims

1. A two-component polyurethane composition with a viscosity of 20 mPas to 3000 mPas (EN ISO 2555, 25 °C), containing
- 30 to 70 wt.% polyester and/or polyether polyols having a functionality greater than 2.5 and having a molecular weight of 200 g/mol to 3000 g/mol,
- 70 to 30 wt.% of at least one polyisocyanate,
- 0.1 to 5 wt.% of additives selected from stabilizers, catalysts and release agents,
wherein the composition has an NCO:OH ratio of 2:1 to 1:2 and polyisocyanates are used, wherein 3 to 25 mol.% of the NCO groups of the polyisocyanates are converted to uretonimine and wherein the composition is free from amine-containing constituents and wherein the crosslinked composition has a glass transition temperature of over 100 °C, measured with DSC, DIN 11357.

2. The 2K PU composition according to claim 1, **characterized in that** the mixture has a viscosity of less than 1000 mPas (25 °C).

3. The 2K PU composition according to one of claims 1 or 2, **characterized in that** it contains MDI and uretonimine derivatives thereof as the polyisocyanate.

4. The 2K PU composition according to one of the preceding claims, **characterized in that** it contains Sn, Ti or Bi compounds as the catalyst, in particular Sn catalysts with cyclic complexing agents selected from cyclic α-hydroxy ketones or 1-alkyl-2,3,4-triphenol derivatives.

5. The 2K PU composition according to one of claims 1 to 4, **characterized in that** the composition is free of catalysts.

6. The 2K PU composition according to one of the preceding claims, **characterized in that** the mixture is substantially free of solvents, plasticizers, carboxylic acids and/or pigments.

7. A method for producing fiber composite materials, wherein an outer mold is filled with fiber materials and a liquid 2K PU composition according to one of claims 1 to 6 is introduced into this mold under pressure.

8. A method for producing fiber composite materials, wherein an outer mold filled with fiber materials is provided and a liquid 2K PU composition according to one of claims 1 to 6 is introduced into this mold with the application of a vacuum.

9. The method according to claim 7 or 8, wherein the fiber content is greater than/equal to 60 vol.% and the 2K PU composition has a viscosity of 20 to 3000 mPas.

10. The method according to claim 9, wherein the mixture is crosslinked at a temperature of up to 120 °C.

11. A fiber composite material containing fiber materials made of organic and/or inorganic fibers, wherein a crosslinked 2K PU composition according to one of claims 1 to 6 is contained as matrix material.

12. The fiber composite material according to claim 11, wherein the fiber content is greater than/equal to 60 vol.%.

13. The fiber composite material according to claim 12, wherein the crosslinked binder matrix has uretonimine groups.

## Revendications

1. Composition de polyuréthane à deux composants comportant une viscosité de 20 mPa·s à 3 000 mPa·s (EN ISO 2555, 25 °C), contenant
- 30 à 70 % en poids de polyester et/ou de polyéther polyol comportant une fonctionnalité supérieure à 2,5 et comportant un poids moléculaire de 200 g/mol à 3 000 g/mol,
- 70 à 30 % en poids d'au moins un polyisocyanate,
- 0,1 à 5 % en poids d'additifs choisis parmi les stabilisants,
catalyseurs et agents de séparation,
la composition présentant un rapport NCO:OH de 2:1 à 1:2 et des polyisocyanates étant utilisés, 3 à 25 % molaire des groupes NCO des polyisocyanates étant convertis en urétonimine et la composition étant exempte de constituants contenant une amine et la composition réticulée présentant une température de transition vitreuse supérieure à 100 °C, mesurée avec DSC, DIN 11357.

2. Composition de PU 2K selon la revendication 1, **caractérisée en ce que** le mélange présente une viscosité inférieure à 1 000 mPa·s (25 °C).

3. Composition de PU 2K selon l'une des revendications 1 ou 2, **caractérisée en ce qu'**elle contient du MDI et ses dérivés d'urétonimine en tant que polyisocyanate.

4. Composition de PU 2K selon l'une des revendications précédentes, **caractérisée en ce que** des composés Sn, Ti ou Bi sont contenus en tant que catalyseur, en particulier des catalyseurs Sn comportant des agents complexants cycliques choisis parmi les α-hydroxycétones cycliques ou les dérivés de 1-alkyl-2,3,4-triphénol.

5. Composition de PU 2K selon l'une des revendications 1 à 4, **caractérisée en ce que** la composition est exempte de catalyseurs.

6. Composition de PU 2K selon l'une des revendications précédentes, **caractérisée en ce que** le mélange est essentiellement exempt de solvants, plastifiants, acides carboxyliques et/ou pigments.

7. Procédé de production de matériaux renforcés par des fibres, dans lequel un moule extérieur est rempli de matériaux fibreux et une composition de PU 2K liquide selon l'une des revendications 1 à 6 est introduite dans ce moule sous pression.

8. Procédé de production de matériaux renforcés par des fibres, dans lequel un moule extérieur rempli de matériaux fibreux est fourni et une composition de PU 2K liquide selon l'une des revendications 1 à 6 est introduite dans ce moule par application sous vide.

9. Procédé selon la revendication 7 ou 8, dans lequel la teneur en fibres est supérieure/égale à 60 % en volume et la composition de PU 2K présente une viscosité de 20 à 3 000 mPa·s.

10. Procédé selon la revendication 9, dans lequel le mélange est réticulé à une température allant jusqu'à 120 °C.

11. Matériau renforcé par des fibres contenant des matériaux fibreux constitués de fibres organiques et/ou inorganiques, dans lequel une composition de PU 2K réticulée selon l'une des revendications 1 à 6 est contenue en tant que matériau de matrice.

12. Matériau renforcé par des fibres selon la revendication 11, dans lequel la teneur en fibres est supérieure/égale à 60 % en volume.

13. Matériau renforcé par des fibres selon la revendication 12, dans lequel la matrice de liant réticulée présente des groupes urétonimine.
